# FASCICULE DE BREVET EUROPEEN

(11) **EP 3 439 898 B1**
(45) Date de publication et mention de la délivrance du brevet: **22.01.2020**
(21) Numéro de dépôt: 17721196.8
(22) Date de dépôt: 05.04.2017
(51) Int. Cl.: B60C 11/03

(54) **BANDE DE ROULEMENT DE PNEU**
REIFENLAUFFLÄCHE
TYRE TREAD

(30) Priorité: 08.04.2016 FR 1653111
(43) Date de publication de la demande: 13.02.2019
(73) Titulaire: Compagnie Générale des Etablissements Michelin, 63000 Clermont-Ferrand (FR)
(72) Inventeur: KEEFE, Brian, 63040 Clermont Ferrand Cedex 9 (FR); DJABOUR, Walid, 63040 Clermont Ferrand Cedex 9 (FR); LARREGAIN, Arnaud, 63040 Clermont Ferrand Cedex 9 (FR)
(74) Mandataire: Lasson, Cédric Yves
(86) Numéro de dépôt international: PCT/FR2017/050797
(87) Numéro de publication internationale: WO 2017/174925

(56) Documents cités:
- WO-A1-2011/039194
- WO-A1-2011/101495
- WO-A1-2015/086622
- WO-A1-2015/086624
- FR-A1- 2 971 732

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau sur la chaussée sont rendues plus pérennes avec l'usure, ces bandes de roulement ayant en outre des performances améliorées en usure.

### ÉTAT DE LA TECHNIQUE

De façon connue, l'utilisation de pneus sur véhicule dans des conditions de roulage par temps de pluie requiert une élimination rapide de l'eau présente dans la région de contact du pneu avec la chaussée afin d'assurer un contact du matériau constituant la bande de roulement avec cette chaussée et ainsi pouvoir générer des efforts de motricité et de freinage tout en contrôlant la trajectoire du véhicule. L'eau qui n'est pas repoussée sur l'avant du pneu s'écoule ou est captée en partie dans les rainures formées dans la bande de roulement du pneu afin de permettre le contact entre le pneu et la chaussée.

Les rainures forment un réseau d'écoulement de l'eau qui se doit d'être pérenne c'est-à-dire être efficace pendant toute la durée d'usage d'un pneu entre son état neuf et son retrait dès lors que son usure atteint la limite fixée par la réglementation.

Pour les pneus destinés aux essieux directeur ou aux essieux porteur d'un véhicule poids lourd, il est usuel de former, dans la bande de roulement de ces pneus, des rainures circonférentielles (ou longitudinales) dont la profondeur est égale à l'épaisseur totale de la bande de roulement (cette épaisseur totale ne prenant pas en compte l'épaisseur éventuellement prévue pour permettre un renouvellement partiel des rainures par une opération dite de recreusage - « regrooving » en anglais). Ainsi, une bande de roulement a une performance en drainage de l'eau qui est toujours au moins égale à une performance minimale dite performance de sécurité et cela quel que soit le niveau de l'usure de cette bande.

Pour les pneus de l'état de la technique, le volume total de creux à neuf est en règle générale de l'ordre d'au moins 10% et au plus égal à 35% du volume total de la bande de roulement destiné à être usé pendant le roulage. Le volume de creux comprend à neuf le volume de toutes les rainures, incisions et cavités formées dans la bande de roulement ; le volume total de bande correspond au volume de matière pris jusqu'au fond des cavités les plus à l'intérieur de la bande auquel est ajouté le volume total de creux.

On constate que ces pneus de l'état de la technique ont un volume de creux disponible dans l'aire de contact qui est relativement important à l'état neuf (volume de creux disponible signifiant que ce volume est potentiellement susceptible d'être rempli en partie ou en totalité par l'eau présente sur la chaussée par temps de pluie). Le volume de creux s'ouvrant sur la surface de roulement dans le contact est évalué lorsque le pneu est soumis à ses conditions usuelle de gonflage et d'écrasement en statique telles que définies notamment par le standard E.T.R.T.O. pour l'Europe. Afin de garantir l'efficacité à drainer l'eau présente sur une chaussée, la personne du métier prend en compte à la fois le volume de creux s'ouvrant dans la région de contact et la surface des creux formée sur la surface de roulement venant en contact avec la chaussée lors du roulage.

Si des rainures ou plus généralement des cavités sont indispensables au drainage de l'eau dans la région de contact avec une chaussée, la diminution de matière qui en résulte sur la bande peut affecter sensiblement la performance en usure de cette bande et en conséquence réduire la durée d'utilisation du pneu résultant notamment par une augmentation de la vitesse d'usure de ladite bande. D'autres performances du pneu peuvent aussi être affectées comme les performances en comportement, en émission de bruit en roulage, voire en résistance au roulement.

Il est également observé que ces rainures, formées pour avoir une profondeur utile égale à la hauteur de bande à user, peuvent être la cause de problèmes d'endurance. Dans certaines conditions de roulage, des objets comme des cailloux peuvent être coincés dans ces rainures et venir agresser le fond de ces rainures et générer l'apparition de cassures dans la matière formant la bande de roulement. Ces cassures peuvent être à l'origine d'infiltration d'eau dans la bande jusqu'aux armatures de renfort.

La réalisation d'une pluralité de rainures sur une bande de roulement a donc pour inconvénient de réduire la quantité de matière de bande pour une largeur donnée de bande et par voie de conséquence de réduire la durée d'utilisation du pneu à cause d'une vitesse d'usure trop élevée.

Par ailleurs, les rainures génèrent un abaissement des rigidités de compression et de cisaillement puisque ces rainures délimitent des portions de matière sensibles à la déformation comparativement aux portions délimitées par des incisions. En effet, dans le cas d'une incision, les parois de matière délimitant cette incision peuvent venir en contact l'une contre l'autre au moins en partie lors du passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Il a été proposé de former à l'intérieur d'une bande de roulement une pluralité de canaux destinés à former de nouvelles rainures après une usure prédéterminée. Le document FR2971732 A décrit une telle bande de roulement. Ce document montre une incision surmontant chaque canal, cette incision reliant elle-même une pluralité de puits s'étendant depuis la surface de roulement à neuf jusqu'au canal. Si la rigidité de la bande est augmentée comparée à celle d'une bande de roulement pourvue de rainure ouverte à neuf sur la surface de roulement, il reste que la capacité d'évacuation de liquide peut être insuffisante dans certaines conditions de roulage.

Pour limiter l'abaissement de rigidité liée à la présence des rainures nécessitée par le besoin d'assurer le drainage de l'eau, il a été proposé une solution décrite dans la publication de brevet WO 2011/039194. Selon cette solution, il est proposé une bande de roulement pour pneu ayant une épaisseur de matière à user, cette bande étant pourvue d'une pluralité de rainures ondulantes s'ouvrant de façon discontinue sur la surface de roulement à neuf et ayant une géométrie ondulant dans la direction de l'épaisseur de la bande. Chaque rainure ondulante est discontinue en surface mais continue à neuf dans l'intérieur de la bande afin de permettre un écoulement de fluide. Cette rainure ondulante est formée dans la bande de roulement par une succession de cavités externes s'ouvrant sur la surface de roulement à neuf et une pluralité de cavités internes, ces dernières étant placées radialement et en totalité à l'intérieur de la surface de roulement à l'état neuf entre les cavités externes. Les cavités internes peuvent être prévues pour être à des profondeurs différentes à l'intérieur de la bande.

En outre, la continuité de l'écoulement d'eau dans chaque rainure ondulante à neuf est assurée par une continuité de passage entre les cavités externes et les cavités internes. Cette continuité est réalisée par des cavités de liaison. Grâce à la présence de ces cavités de liaison, il est possible d'assurer une circulation de l'eau d'une cavité externe vers une cavité interne et ainsi d'obtenir un meilleur drainage de l'eau.

Pour faciliter le moulage et le démoulage de ce type de rainure ondulante, il a été envisagé de combiner chaque rainure ondulante avec des incisions prolongeant les cavités internes jusqu'à la surface de roulement à neuf.

Grâce à cette structure de bande de roulement, on obtient, malgré un volume de creux réduit par rapport à celui des rainures usuelles, une bande de roulement ayant un drainage approprié à neuf. Ce type de rainure permet ainsi de limiter la diminution de rigidité de la bande de roulement à l'état neuf liée à la formation de creux.

Si ce type de rainure est performant à neuf et jusqu'à une usure partielle correspondant à la disparition des cavités externes, force est de constater que lorsque les cavités internes s'ouvrent sur la surface de roulement, ces cavités sont discontinues et qu'il est nécessaire de prévoir un réseau additionnel d'écoulement par exemple en formant à l'état neuf des cavités sous la surface de roulement se transformant en rainures continues après usure partielle.

Le besoin s'est donc fait sentir de conserver une bonne aptitude à drainer les fluides quel que soit le niveau d'usure tout en réduisant au juste nécessaire le volume de creux sans pénaliser la performance en usure que ce soit en vitesse d'usure ou en régularité d'usure. C'est l'objet de la présente invention.

### Définitions :

Plan médian équatorial : c'est un plan perpendiculaire à l'axe de rotation et passant par les points du pneu radialement les plus éloignés dudit axe.

Par direction radiale, on entend une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une bande de roulement a une épaisseur maximale de matière à user en roulage ; cette épaisseur maximale correspond à la profondeur à partir de laquelle il devient nécessaire de renouveler le pneu soit par la mise en place d'une nouvelle bande de roulement soit par le remplacement par un pneu neuf.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.T.R.T.O..

Une rainure est dite continue dès lors qu'elle est ouverte sur la surface de roulement à neuf et cela sur toute sa longueur selon sa direction principale.

Une rainure est dite discontinue dès lors qu'elle est formée d'une succession de parties ouvertes sur la surface de roulement à neuf, ces parties étant disjointes les unes des autres dans la direction principale de cette rainure (c'est à dire sur son étendue).

La surface moyenne d'une rainure continue ou discontinue est définie comme une surface virtuelle divisant cette rainure, dans la direction principale de cette rainure, en deux parties égales ou sensiblement égales en volume.

La direction principale d'une rainure correspond à la direction principale d'un écoulement d'eau dans la rainure lors d'un roulage sur une chaussée revêtue d'eau.

### BREF EXPOSE DE L'INVENTION

La présente invention vise à obtenir un pneu ayant une bande de roulement conférant au pneu une bonne performance de roulage par temps de pluie tout en proposant un dessin de sculpture de bande de roulement amélioré en usure et plus particulièrement apte à réduire les risques d'usure irrégulière.

À cet effet, l'invention a pour objet une bande de roulement de pneu comprenant une surface de roulement destinée à venir en contact avec une chaussée, cette bande de roulement ayant au moins une rainure principale s'ouvrant à l'état neuf sur la surface de roulement de la bande, cette rainure ayant une profondeur maximale P, cette rainure principale comprenant une pluralité de premiers tronçons de rainure et une pluralité de deuxièmes tronçons de rainure, ces premiers et deuxièmes tronçons de rainure étant disposés en alternance de manière à ce qu'un premier tronçon soit suivi par un deuxième tronçon, cette bande de roulement étant caractérisée en ce que chaque premier tronçon de rainure a une largeur décroissante avec l'usure, chaque premier tronçon de rainure ayant une largeur maximale L1 mesurée sur la surface de roulement à neuf et une largeur maximale L1' à la profondeur P, la largeur maximale L1' à la profondeur P étant inférieure à la largeur maximale L1, chaque deuxième tronçon de rainure a une largeur croissante avec l'usure, chaque deuxième tronçon de rainure ayant une largeur maximale L2 mesurée sur la surface de roulement à neuf et une largeur maximale L2' à la profondeur P, la largeur maximale L2 étant inférieure à la largeur maximale L2', les premiers et seconds tronçons de rainure sont disposés de manière à former un passage en creux entre les volumes délimités par les premiers et deuxièmes tronçons de rainure sur toute la longueur de la rainure, ce passage présentant une section dont la largeur maximale est localisée entre 30% et 85 % de la profondeur P de la rainure.

Ce passage est continu dans la direction de la rainure, c'est à dire qu'il n'est pas interrompu ce qui permet l'écoulement d'un fluide en permanence dans la rainure.

En outre, les variations des largeurs entre les largeurs maximales et les largeurs minimales que ce soit pour les premiers ou les seconds tronçons de rainure sont progressives, c'est à dire qu'elles sont formées par des surfaces régulières raccordant les tronçons de rainure entre eux. Ces variations peuvent être réalisées de manière continue ou discontinue.

De la sorte, on obtient une surface de creux et un volume utile pour le drainage qui sont optimaux quel que soit l'état d'usure tout en augmentant la quantité de matière de bande de roulement en contact avec la chaussée ce qui a pour effet d'augmenter la durée de vie sur usure. Cette solution technique permet d'obtenir un taux de creux surfacique au moins égal à 40% et au plus égal à 60% de la surface de creux surfacique obtenu avec une rainure continue de largeur égale à la largeur maximale L1 des parties ouvertes sur la surface de roulement à neuf. Cette même relation est conservée lorsque l'usure de la bande de roulement est de 50% de son épaisseur à user voire 90% de son épaisseur.

La profondeur P de la rainure est supérieure à l'épaisseur E de matière à user afin que lorsque la limite d'usure est atteinte, il reste suffisamment de creux pour assurer un captage de l'eau par temps de pluie.

Le changement de la géométrie des arêtes de la rainure (intersections des parois de la rainure avec la surface de roulement) est continue avec l'usure ce qui est favorable sur la forme d'usure.

Par ailleurs le volume total de creux à neuf peut être approprié au juste nécessaire à tous les stades d'usure de la bande de roulement. De façon avantageuse, le taux de creux volumique à neuf est compris entre 5% et 16% et encore plus préférentiellement compris entre 7% et 12%.

Préférentiellement, les largeurs maximales L1 et L2' des premiers et deuxièmes tronçons de rainure sont au moins égales à 5 mm.

Préférentiellement pour les pneus de poids lourd, la largeur minimale L2 est inférieure à 2 mm et préférentiellement inférieure à 1 mm afin d'assurer un contact entre paroi opposées lors du passage dans le contact avec une chaussée.

Dans une variante de l'invention, la largeur L1' du fond des premiers tronçons est au moins cinq fois plus grande que la largeur L2 des deuxièmes tronçons en surface de roulement. Avantageusement, les volumes des premiers tronçons de rainure sont identiques ou quasi identiques aux volumes des seconds tronçons. Lorsque les volumes sont quasi identiques cela signifie que l'écart de volume est au plus 10% du volume le plus grand.

Dans une variante intéressante, il est possible de choisir une longueur des premiers tronçons qui est plus petite que celle des deuxièmes tronçons. Les longueurs de chacun des tronçons sont mesurées dans la direction principale de ces tronçons, c'est à dire dans la direction principale d'écoulement de l'eau à l'intérieur desdits tronçons.

Afin de favoriser un écoulement de liquide dans la rainure selon l'invention en limitant les pertes de charge, il est judicieux de prévoir entre un premier tronçon de rainure et un second tronçon de rainure une région de raccordement réduisant les discontinuités géométriques entre lesdits tronçons.

Dans une variante intéressante de l'invention, la rainure selon l'invention coupe la surface de roulement à neuf selon deux arêtes, ces arêtes ayant des géométries identiques et symétriques par rapport à un axe s'étendant dans la direction principale de la rainure.

Dans une autre variante de l'invention, la rainure selon l'invention coupe la surface de roulement à neuf selon deux arêtes, ces arêtes ayant des géométries identiques et décalées l'une par rapport à l'autre dans la direction principale de la rainure.

Avantageusement les longueurs des premiers et deuxièmes tronçons de rainure sont égales ou sensiblement égaux. Bien entendu, ces longueurs peuvent être adaptées selon l'objectif recherché.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue partielle d'une bande de roulement comprenant une rainure principale selon l'invention ;
La figure 2 montre une vue en coupe de la bande montrée avec la figure 1 selon un plan de coupe dont la trace est repérée par la ligne II-II ;
Les figures 3 à 5 montrent les arêtes formées par la rainure sur la surface de roulement à différents niveaux d'usure ;
La figure 6 représente en coupe une autre variante d'une rainure selon l'invention ;
La figure 7 représente en coupe une autre variante d'une rainure selon l'invention ;
La figure 8 montre un élément moulant employé dans un moule de bande de roulement pour mouler une variante de rainure selon l'invention, cette rainure ayant des raccordements entre les premiers et deuxièmes tronçons de rainure.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

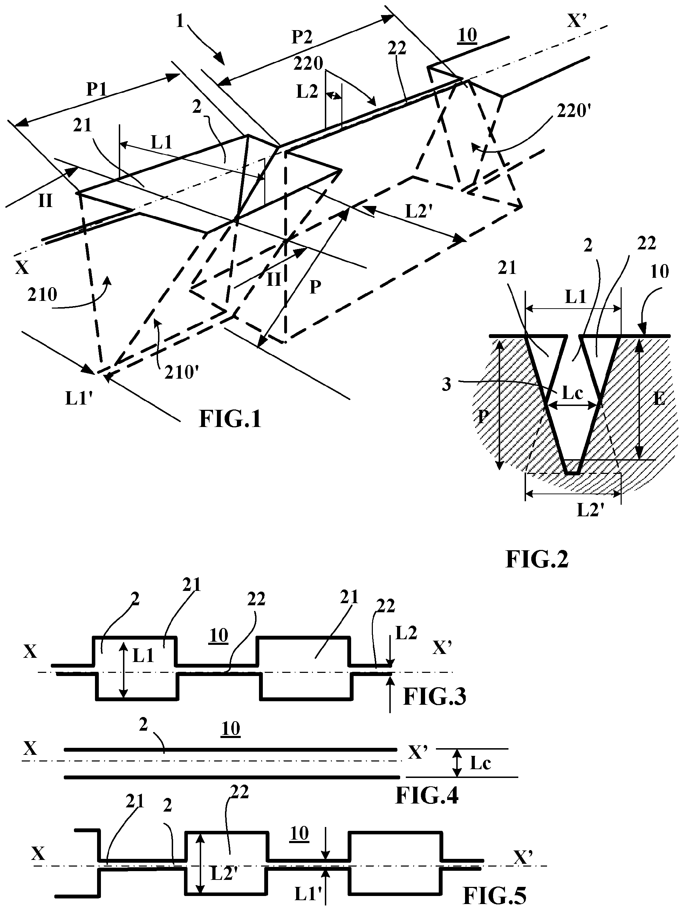

La figure 1 représente une vue partielle en volume d'une bande de roulement 1 comprenant une rainure principale selon l'invention. Cette bande 1 comprend une surface de roulement 10 destinée à venir en contact avec la chaussée lors du roulage.

Sur cette figure 1, on voit une rainure 2 selon l'invention formée par une succession de cavités formant des premiers tronçons 21 et des deuxièmes tronçons 22 de rainure.

Sur cette vue les premiers tronçons 21 de rainure ont, en section transversale, une forme générale triangulaire dont la largeur sur la surface de roulement à neuf de la bande de roulement est égale à L1 tandis qu'à une profondeur P correspondant à la profondeur de la rainure, la largeur du fond de ce premier tronçon est égale à L1'. Cette dernière largeur L1' est inférieure à la largeur L1 en surface.

Dans le prolongement de ce premier tronçon 21 on trouve un deuxième tronçon 22 qui en volume correspond au volume du premier tronçon 21 et qui se trouve être en position retournée par rapport au premier tronçon. Dans cette variante, la largeur en surface du deuxième tronçon de rainure est égale à L2', cette largeur étant égale à L1', tandis qu'en fond du deuxième tronçon 22 la largeur est égale à L2, cette dernière étant elle-même égale à L1.

Les premiers tronçons 21 et deuxièmes tronçons 22 de rainure ont dans cette variante une même longueur. La personne du métier peut bien entendu adapter les longueurs respectives P1, P2 de ces premiers et deuxièmes tronçons en fonction de l'objectif visé.

Dans l'exemple montré pour faire comprendre l'invention, les raccordements entre tronçons se font de manière abrupte. Bien entendu il est possible de faire en sorte que ces raccordements soient réalisés de manière à ce qu'il y ait une continuité des pentes prises sur les courbes de niveau. Par courbe de niveau on entend une arête formée par la rainure sur une surface de roulement à un état d'usure de la bande de roulement.

La figure 2 montre une vue en coupe de la rainure montrée avec la figure 1 selon un plan de coupe dont la trace est repérée par la ligne II-II.

Dans cette configuration on observe qu'il existe une section ouverte 3 entre les tronçons de rainure pour former un passage apte à assurer une continuité de l'écoulement de liquide dans la rainure. On observe que la largeur maximale Lc de cette section de passage 3 est localisée sensiblement à mi profondeur de la rainure 2.

Les figures 3 à 5 montrent le tracé des arêtes formées par la rainure sur la surface de roulement à différents niveaux d'usure.

La figure 3 montre l'ouverture sur la surface de roulement à neuf de la rainure selon la variante montrée à la figure 1. On distingue des parties ouvertes de largeur L1 et des parties ouvertes de largeur L2 inférieure à la largeur L1.

La figure 4 montre la même surface de roulement après une usure sensiblement égale à 50% de la profondeur P de la rainure. À mi usure on voit que les arêtes sont sensiblement parallèles et distantes l'une de l'autre d'une largeur Lc.

La figure 5 montre la surface de roulement après une usure correspondant à la limite légale d'usure. On observe une géométrie sensiblement identique à celle qui préexistait à l'état neuf puisque les deuxièmes tronçons sont maintenant ouverts sur la surface de roulement avec une largeur L2' égale à la largeur L1 des premiers tronçons sur la surface de roulement à neuf.

Grâce à l'invention, il est possible d'avoir, pour tous les niveaux d'usure, une surface d'ouverture de la rainure sur la surface de roulement qui est supérieure à une valeur minimale choisie au préalable par la personne du métier tout en réduisant sensiblement le volume de creux au minimum nécessaire pour assurer un drainage performant.

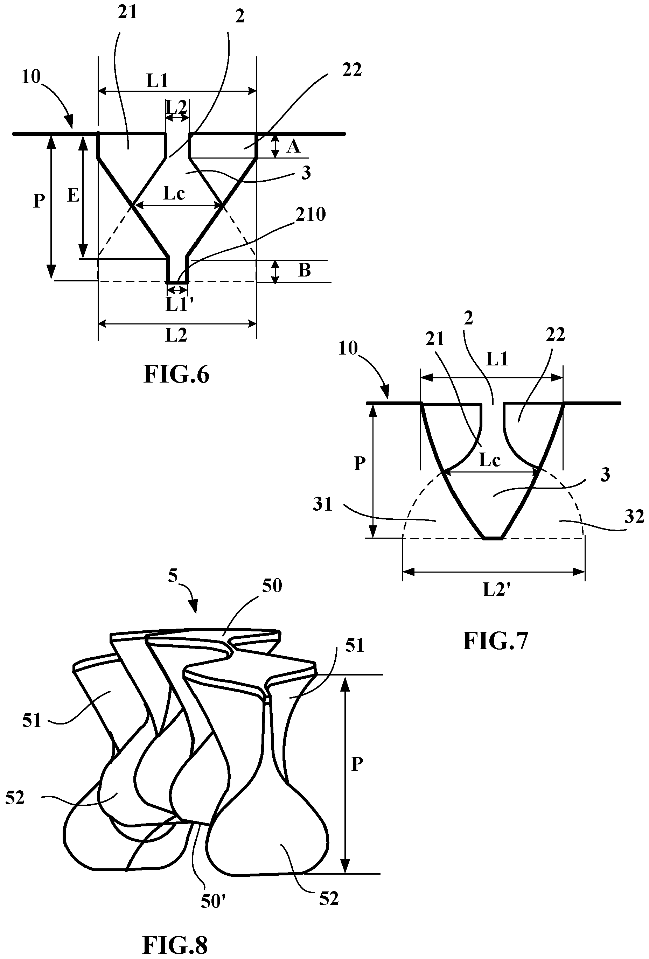

La figure 6 montre en coupe une autre variante d'une rainure 2 selon l'invention. Dans cette variante, chaque premier tronçon 21 de rainure comprend en fond 210 une partie de hauteur B et de largeur constante L1' ; cette partie correspond à ce qui reste de la rainure 2 quand la limite d'usure est atteinte et que l'épaisseur E de la bande de roulement est usée en totalité.

En outre chaque deuxième tronçon 22 de rainure comprend une partie de largeur L2 s'étendant sur une profondeur A. Ainsi il est possible à l'état neuf que lors du passage dans le contact avec la chaussée, chaque deuxième tronçon 22 de rainure puisse se fermer sur cette hauteur A par contact entre les parois en vis-à-vis pour augmenter la rigidité de la bande tout en conservant un pouvoir de drainage de liquide puisqu'il existe une continuité de drainage entre les tronçons de rainure. En effet, les premiers tronçons 21 sont ouverts sur la surface de roulement pour capter le liquide tandis qu'il existe un passage 3 continu dans la rainure d'un tronçon à un autre, ce passage 3 permettant la circulation de liquide.

Sur la variante montrée avec la figure 7, les dimensions des deuxièmes tronçons 22 sont choisies de manière à ce que la largeur L2' en fond soit supérieure à la largeur maximale L1 en surface des premiers tronçons 21 pour former des cavités 31, 32 dans les parois de la rainure 2. Grâce à cette disposition, il est possible de positionner la largeur maximale Lc de la section du passage 3 à une profondeur plus proche de la surface de roulement 10 à neuf et d'augmenter le volume disponible de rainure.

Les géométries des rainures décrites permettent de conserver une continuité d'écoulement dans la rainure appropriée tout en optimisant le volume de matière au contact avec la chaussée.

La figure 8 montre un élément moulant 5 employé dans un moule de bande de roulement pour mouler une variante de rainure selon l'invention, cette rainure ayant des régions de raccordement entre les premiers et deuxièmes tronçons de rainure. Cet élément moulant 5 est formé d'une alternance de premières parties d'élément 51 et de deuxièmes parties d'élément 52, chaque première partie 51 moule un premier tronçon de rainure tandis que chaque deuxième partie 52 moule un deuxième tronçon de rainure. Ce type d'élément moulant peut être avantageusement réalisé selon un procédé de fabrication par fusion sélective de couches de poudre superposées communément appelé frittage ; ce procédé est décrit notamment dans la publication WO 2016/016136. Grâce à cet élément moulant on moule une rainure formée d'une alternance de tronçons de rainure ayant une surface ouverte sur la surface de roulement qui va en diminuant jusqu'à la pleine profondeur de la rainure tandis que de part et d'autre de ces tronçons on moule des tronçons de rainure ayant une surface ouverte sur la surface de roulement qui va en augmentant jusqu'à la pleine profondeur. Par surface de roulement on entend ici la surface considérée à chaque état d'usure de la bande de roulement.

La face supérieure 50 est destinée à être liée au moule de la bande de roulement. La face inférieure 50' moulant le fond de la rainure.

Dans cette variante, on alterne premières et deuxième parties d'élément, chaque partie étant construite sur une forme de base identique à l'orientation près. En effet une première partie une largeur L1 en surface de roulement à neuf a une largeur décroissante dans sa hauteur pour se terminer par une largeur L1' inférieure à L1 tandis qu'une deuxième partie a les mêmes dimensions que la première partie mais est retournée de façon à ce que sa largeur la plus petite se trouve en surface de roulement à neuf.

Ici les premières et deuxièmes parties de l'élément moulant sont reliées entre elles par des formes géométriquement continues et elles mêmes continument dérivables. De cette façon, il est possible d'assurer une transition douce entre les différentes parties de l'élément moulant, ce qui est favorable pour l'écoulement de liquide à l'intérieur de la rainure moulée grâce à cet élément moulant.

L'invention concerne également un pneu pourvu d'une bande de roulement telle que décrite et encore plus particulièrement un pneu destiné à équiper l'essieu directeur d'un véhicule poids lourd.

Bien entendu, l'invention n'est pas limitée aux exemples décrits et représentés et diverses modifications peuvent y être apportées sans sortir du cadre tel que défini par les revendications. Notamment, ce qui a été décrit avec une rainure orientée principalement en direction circonférentiel peut être appliqué à une rainure d'orientation oblique ou transversale.

De même la mise en œuvre de l'invention peut se faire sur différents types de pneus que ce soit en pneu pour véhicule poids lourd, en pneu pour véhicules de tourisme ou tout autre type de pneu pour lequel il est nécessaire d'avoir un volume de creux minimal pour assurer un drainage suffisant tout en limitant ce volume pour obtenir de bonnes performances en usure.

## Revendications

1. Bande de roulement (1) de pneu comprenant une surface de roulement destinée à venir en contact avec une chaussée, cette bande de roulement (1) ayant au moins une rainure principale (2) s'ouvrant à l'état neuf sur la surface de roulement (10) de la bande, cette rainure principale (2) ayant une profondeur maximale (P), cette rainure principale (2) comprenant une pluralité de premiers tronçons (21) de rainure et une pluralité de deuxièmes tronçons (22) de rainure, ces premiers et deuxièmes tronçons de rainure étant disposés en alternance de manière à ce qu'un premier tronçon (21) soit suivi par un deuxième tronçon (22), cette bande de roulement (1) étant **caractérisée en ce que** chaque premier tronçon (21) de rainure a une largeur décroissante avec l'usure, chaque premier tronçon (21) de rainure ayant une largeur maximale (L1) mesurée sur la surface de roulement à neuf et une largeur maximale (L1') à la profondeur maximale (P), la largeur maximale (L1') à la profondeur maximale (P) étant inférieure à la largeur maximale (L1) mesurée sur la surface de roulement à neuf, chaque deuxième tronçon (22) de rainure a une largeur croissante avec l'usure, chaque deuxième tronçon (22) de rainure ayant une largeur maximale (L2) mesurée sur la surface de roulement à neuf (10) et une largeur maximale (L2') à la profondeur maximale (P), la largeur maximale (L2) mesurée sur la surface de roulement à neuf étant inférieure à la largeur maximale (L2') à la profondeur maximale (P) , les premiers et seconds tronçons de rainure sont disposés de manière à former un passage (3) en creux entre les volumes délimités par les premiers et deuxièmes tronçons de rainure sur toute la longueur de la rainure (2), ce passage (3) présentant une section dont la largeur maximale est localisée entre 30% et 85 % de la profondeur maximale (P) de la rainure (2).

2. Bande de roulement de pneu selon la revendication 1 **caractérisée en ce que** les variations des largeurs des premiers et des deuxièmes tronçons de rainure sont continues.

3. Bande de roulement de pneu selon la revendication 1 ou la revendication 2 **caractérisée en ce que**, sur au moins 50% de l'épaisseur E de la bande de roulement, le taux de creux surfacique est au moins égal à 40% et au plus égal à 60% de la surface de creux surfacique obtenu avec une rainure continue de largeur égale à la largeur maximale L1 des premiers tronçons de rainure (21) sur la surface de roulement à neuf.

4. Bande de roulement de pneu selon l'une des revendications 1 à 3 **caractérisée en ce que** la largeur L1' du fond des premiers tronçons de rainure (21) est au moins cinq fois plus grande que la largeur L2 des deuxièmes tronçons de rainure (22) en surface de roulement à neuf.

5. Bande de roulement de pneu selon l'une des revendications 1 à 4 **caractérisée en ce que** les volumes de creux des premiers tronçons de rainure (21) sont identiques ou quasi identiques aux volumes des seconds tronçons (22), dans ce dernier cas l'écart de volume étant d'au plus 10% du volume le plus grand.

6. Bande de roulement de pneu selon l'une des revendications 1 à 5 **caractérisée en ce qu'**entre un premier tronçon de rainure (21) et un deuxième tronçon de rainure (22) il est formé une région de raccordement entre lesdits tronçons.

7. Bande de roulement de pneu selon l'une des revendications 1 à 6 **caractérisée en ce que** la rainure (2) formée d'une pluralité de premiers tronçons de rainure (21) et deuxièmes tronçons de rainure (22) coupant la surface de roulement à neuf selon deux arêtes, ces arêtes ont des géométries identiques et symétriques par rapport à un axe s'étendant dans la direction principale de la rainure (2).

8. Bande de roulement de pneu selon l'une des revendications 1 à 6 **caractérisée en ce que** la rainure (2) formée d'une pluralité de premiers tronçons de rainure (21) et deuxièmes tronçons de rainure (22) coupant la surface de roulement à neuf selon deux arêtes, ces arêtes ont des géométries décalées l'une par rapport à l'autre dans la direction principale de la rainure.

9. Pneu pour véhicule poids lourd pourvu d'une bande de roulement (10) selon l'une quelconque des revendications 1 à 8.

## Patentansprüche

1. Reifenlaufstreifen (1), der eine Lauffläche enthält, die dazu bestimmt ist, mit einer Straße in Kontakt zu kommen, wobei dieser Laufstreifen (1) mindestens eine Hauptrille (2) hat, die sich im Neuzustand auf die Lauffläche (10) des Streifens öffnet, wobei diese Hauptrille (2) eine maximale Tiefe (P) hat, wobei diese Hauptrille (2) eine Vielzahl erster Rillenabschnitte (21) und eine Vielzahl zweiter Rillenabschnitte (22) enthält, wobei diese ersten und zweiten Rillenabschnitte abwechselnd so angeordnet sind, dass auf einen ersten Abschnitt (21) ein zweiter Abschnitt (22) folgt, wobei dieser Laufstreifen (1) **dadurch gekennzeichnet ist, dass** jeder erste Rillenabschnitt (21) eine mit der Abnutzung abnehmende Breite hat, wobei jeder erste Rillenabschnitt (21) eine maximale Breite (L1) gemessen an der Lauffläche im Neuzustand und eine maximale Breite (L1') bei der maximalen Tiefe (P) hat, wobei die maximale Breite (L1') bei der maximalen Tiefe (P) geringer als die maximale Breite (L1) gemessen an der Lauffläche im Neuzustand ist, wobei jeder zweite Rillenabschnitt (22) eine mit der Abnutzung zunehmende Breite hat, wobei jeder zweite Rillenabschnitt (22) eine maximale Breite (L2) gemessen an der Lauffläche im Neuzustand (10) und eine maximale Breite (L2') bei der maximalen Tiefe (P) hat, wobei die maximale Breite (L2) gemessen an der Lauffläche im Neuzustand geringer als die maximale Breite (L2') bei der maximalen Tiefe (P) ist, wobei die ersten und zweiten Rillenabschnitte so angeordnet sind, dass sie über die ganze Länge der Rille (2) einen ausgehöhlten Übergang (3) zwischen den von den ersten und zweiten Rillenabschnitten begrenzten Volumen bilden, wobei dieser Übergang (3) einen Querschnitt aufweist, dessen maximale Breite sich zwischen 30% und 85% der maximalen Tiefe (P) der Rille (2) befindet.

2. Reifenlaufstreifen nach Anspruch 1, **dadurch gekennzeichnet, dass** die Änderungen der Breiten der ersten und zweiten Rillenabschnitte kontinuierlich sind.

3. Reifenlaufstreifen nach Anspruch 1 oder Anspruch 2, **dadurch gekennzeichnet, dass** über mindestens 50% der Dicke E des Laufstreifens der Flächenaushöhlungsanteil mindestens gleich 40% und höchstens gleich 60% der Flächenaushöhlungsfläche ist, die mit einer durchgehenden Rille einer Breite gleich der maximalen Breite L1 der ersten Rillenabschnitte (21) an der Lauffläche im Neuzustand erhalten wird.

4. Reifenlaufstreifen nach einem der Ansprüche 1 bis 3, **dadurch gekennzeichnet, dass** die Breite L1' des Grunds der ersten Rillenabschnitte (21) mindestens fünf Mal größer ist als die Breite L2 der zweiten Rillenabschnitte (22) an der Lauffläche im Neuzustand.

5. Reifenlaufstreifen nach einem der Ansprüche 1 bis 4, **dadurch gekennzeichnet, dass** die Aushöhlungsvolumen der ersten Rillenabschnitte (21) gleich oder praktisch gleich den Volumen der zweiten Abschnitte (22) sind, wobei in diesem letzteren Fall die Volumenabweichung höchstens 10% des größten Volumens ist.

6. Reifenlaufstreifen nach einem der Ansprüche 1 bis 5, **dadurch gekennzeichnet, dass** zwischen einem ersten Rillenabschnitt (21) und einem zweiten Rillenabschnitt (22) ein Anschlussbereich zwischen den Abschnitten gebildet wird.

7. Reifenlaufstreifen nach einem der Ansprüche 1 bis 6, **dadurch gekennzeichnet, dass**, wenn die aus einer Vielzahl von ersten Rillenabschnitten (21) und zweiten Rillenabschnitten (22) geformte Rille (2) die Lauffläche im Neuzustand gemäß zwei Kanten schneidet, diese Kanten gleiche und bezüglich einer Achse symmetrische Geometrien haben, die sich in der Hauptrichtung der Rille (2) erstreckt.

8. Reifenlaufstreifen nach einem der Ansprüche 1 bis 6, **dadurch gekennzeichnet, dass**, wenn die aus einer ersten Vielzahl von Rillenabschnitten (21) und zweiten Rillenabschnitten (22) geformte Rille (2) die Lauffläche im Neuzustand gemäß zwei Kanten schneidet, diese Kanten zueinander versetzte Geometrien in der Hauptrichtung der Rille haben.

9. Reifen für einen Schwerlastwagen, der mit einem Laufstreifen (10) nach einem der Ansprüche 1 bis 8 ausgestattet ist.

## Claims

1. Tyre tread (1) comprising a tread surface intended to come into contact with a road surface, this tread (1) having at least one main groove (2) that, when new, opens onto the tread surface (10) of the tread, this main groove (2) having a maximum depth (P), this main groove (2) comprising a plurality of first groove portions (21) and a plurality of second groove portions (22), these first and second groove portions being arranged alternately such that a first portion (21) is followed by a second portion (22), this tread (1) being **characterized in that** each first groove portion (21) has a width that decreases with wear, each first groove portion (21) having a maximum width (L1) measured on the tread surface when new and a maximum width (L1') at the maximum depth P, the maximum width (L1') at the maximum depth P being less than the maximum width (L1) measured on the tread surface when new, each second groove portion (22) has a width that increases with wear, each second groove portion (22) having a maximum width (L2) measured on the tread surface when new (10) and a maximum width (L2') at the maximum depth (P), the maximum width (L2) measured on the tread surface when new being less than the maximum width (L2') at the maximum depth (P), the first and second groove portions are arranged so as to form a void passage (3) between the volumes delimited by the first and second groove portions over the whole length of the groove (2), this passage (3) having a cross section, the maximum width of which is located between 30% and 85% of the maximum depth (P) of the groove (2).

2. Tyre tread according to Claim 1, **characterized in that** the variations in the widths of the first and second groove portions are continuous.

3. Tyre tread according to Claim 1 or Claim 2, **characterized in that**, over at least 50% of the thickness E of the tread, the content of surface voids is at least equal to 40% and at most equal to 60% of the surface area of surface voids obtained with a continuous groove with a width equal to the maximum width L1 of the first groove portions (21) on the tread surface when new.

4. Tyre tread according to one of Claims 1 to 3, **characterized in that** the width L1' of the bottom of the first groove portions (21) is at least five times larger than the width L2 of the second groove portions (22) at the tread surface when new.

5. Tyre tread according to one of Claims 1 to 4, **characterized in that** the void volumes of the first groove portions (21) are identical, or virtually identical, to the volumes of the second portions (22), in the latter case the difference in volume being at most 10% of the largest volume.

6. Tyre tread according to one of Claims 1 to 5, **characterized in that**, between a first groove portion (21) and a second groove portion (22), a connection region is formed between said portions.

7. Tyre tread according to one of Claims 1 to 6, **characterized in that**, the groove (2) formed of a plurality of first groove portions (21) and second groove portions (22) intersecting the tread surface when new along two corner edges, these corner edges have identical and symmetrical geometries relative to an axis extending in the main direction of the groove (2).

8. Tyre tread according to one of Claims 1 to 6, **characterized in that**, the groove (2) formed of a plurality of first groove portions (21) and second groove portions (22) intersecting the tread surface when new along two corner edges, these corner edges have geometries that are offset relative to one another in the main direction of the groove.

9. Tyre for heavy-duty vehicle, provided with a tread (10) according to any one of Claims 1 to 8.
